**Europäisches Patentamt**

**European Patent Office**

**Office européen des brevets**

(19)

(11) Veröffentlichungsnummer: **0 158 023**
**B1**

(12)
# EUROPÄISCHE PATENTSCHRIFT

(45) Veröffentlichungstag der Patentschrift:
27.04.88

(21) Anmeldenummer: 85101208.8

(22) Anmeldetag: 06.02.85

(51) Int. Cl.⁴: **G 08 B 29/00, G 01 S 7/52**

(54) Verfahren und Schaltungsanordnung zur Funktionskontrolle von Ultraschall-Alarmanlagen.

(30) Priorität: 13.02.84 CH 762/84

(43) Veröffentlichungstag der Anmeldung:
16.10.85 Patentblatt 85/42

(45) Bekanntmachung des Hinweises auf die Patenterteilung:
27.04.88 Patentblatt 88/17

(84) Benannte Vertragsstaaten:
BE CH DE FR GB IT LI NL SE

(56) Entgegenhaltungen:
CH-A-612 026
GB-A-1 006 362
US-A-3 932 870

(73) Patentinhaber: CERBERUS AG, Alte Landstrasse 411, CH- 8708 Männedorf (CH)

(72) Erfinder: Steiner, Peter, Hombrechtikerstrasse 16, CH- 8645 Jona (CH)
Erfinder: Genähr, Rudolf, Breitenloostrasse 4, CH- 8708 Männedorf (CH)
Erfinder: Siegwart, David, Durststrasse 15, CH- 8706 Meilen (CH)

(74) Vertreter: Tiemann, Ulrich, Dr.- Ing., c/o Cerberus AG Patentabteilung Alte Landstrasse 411, CH- 8708 Männedorf (CH)

EP 0 158 023 B1

**Beschreibung**

Die Erfindung betrifft ein Verfahren zur Funktionskontrolle von Ultraschall-Alarmanlagen mit einem in einen überwachten Bereich Ultraschall-wellen mit bestimmter Frequenz ausstrahlenden Ultraschall-Sender und einem Ultraschall-Aufnehmen zum Empfang von Ultraschall-Wellen aus dem überwachten Bereich und zur Umwandlung in ein elektrischen Signal, welches einer elektrischen Auswerteschaltung zugeführt wird, die bei einer Bestimmten Frequenzabweichung der empfangenen von den ausgestrahlten Ultraschall-Wellen ein Alarmsignal auslöst, wobei während einer Test-Phase eine einem Alarmzustand entsprechende Frequenzabweichung simuliert wird, sowie eine Schaltungsanordnung zur Anwendung des Verfahrens.

Ein solches Verfahren ist beispielsweise aus der CH-A-612 026 oder der US-A-3 932 870 bekannt. Dabei wird die Tatsache ausgenützt, dass eine sich im überwachten Bereich bewegende Person infolge des Doppler-Effektes eine Frequenzänderung eines Teiles der Ultraschall-Wellen mit einem seiner Bewegungsgeschwindigkeit entsprechenden Betrag verursacht, die von der Auswerteschaltung als Alarmzustand signalisiert wird. Hierzu wird die Frequenz der empfangenen Ultraschall-Wellen fortwährend mit der Sende-Frequenz verglichen und bei für eine sich bewegende Person charakteristischen Frequenzabweichungen, wie z. B. in CH-A-556 070 beschrieben, ein Alarmsignal ausgelöst.

Bei dem in CH-A-612 026 beschriebenen Verfahren wird eine Funktionskontrolle der Ultraschall-Alarmanlage dadurch erreicht, dass während einer Test-Phase nicht die reine Sendefrequenz als Vergleichsfrequenz des Empfängers verwendet wird, sondern eine modulierte Schwingung. Hierbei wird die Modulation so gewählt, dass nach Mischung mit dem Empfänger-Signal ein Doppler-Signal entsteht, das dem einer sich bewegenden Person entspricht. Auch kann der Laufzeit-Unterschied der durch den überwachten Raum laufenden Ultraschall-Wellen und eines direkt vom Sender zum Empfänger, bzw. der Auswerteschaltung übertragenen elektrischen Referenzsignales zur Funktionskontrolle ausgenützt werden.

Diese vorbekannten Ultraschall-Alarmanlagen, bei denen kontinuierlich Ultraschall mit bestimmter Frequenz in den überwachten Bereich ausgestrahlt wird, haben jedoch den Nachteil, dass sich im Raum ein stehendes Wellenfeld bildet, bei dem sich die an verschiedenen Punkten reflektierten Wellen zusammen mit den ausgesandten Wellen im Empfängers je nach Amplitude und Phasenlage vektoriell zum Empfänger-Signal addieren. Je nach Anordnung der reflektierenden Objekte im Raum und den Umgebungsbedingungen kann daher das Empfänger-Signal in weiten Grenzen von Null bis zu einem Maximum schwanken.

Zudem ändert sich das Signal, z. B. infolge Temperaturschwankungen Änderungen der Luftfeuchtigkeit oder des Luftdruckes laufend in weiten Grenzen, und entsprechend schwankt die Empfindlichkeit der Alarmanlage unkontrollierbar. Zu Zeiten eines schwachen Empfänger-Signales ergibt die Multiplikation mit einem modulierten Referenz-Signal jedoch obenfalls nur ein schwaches Doppler-Signal, so dass die Funktionskontrolle unwirksam wird. Daher können auch Änderungen des Ultraschall-Feldes, z. B. durch Anbringen einer schallabsorbierenden Wand vor dem Sender bei einem Sabotage-Versuch nicht von zufälligen Schwankungen des Wellenfeldes unterschieden werden.

Die Erfindung setzt sich die Aufgabe, die erwähnten Nachteile vorbekannter Ultraschall-Alarmanlagen zu beseitigen und insbesondere bei solchen Anlagen eine möglichst universelle und von den Umgebungsbedingungen weitgehend unabhängige Funktionskontrolle zu gewährleisten, die auch statische oder sehr langsame Veränderungen im überwachten Bereich sicher und mit möglichst geringem Schaltungsaufwand zu erkennen vermag und von zufälligen Empfindlichkeits-Schwankungen der Anlage unterscheiden kann, so dass Sabotage-Versuche sicher gemeldet werden können.

Erfindungsgemäss wird diese Aufgabe dadurch gelöst, dass die Frequenz der ausgestrahlten Ultraschall-Wellen während der Test-Phase mit einem bestimmten Frequenzspektrum moduliert wird, das die zur Alarmauslösung ausgewertete Frequenzabweichung umfasst, und dass nach Abschaltung des modulierten Signals von der Auswerteschaltung der zeitliche Abfall des empfangenen Signales im Vergleich zu einem Referenzsignal zur Signalgabe ausgewertet wird.

Hierbei wird ausgenützt, dass die von verschiedenen Objekten im überwachten Bereich reflektierten Ultraschall-Wellen eine unterschiedliche Laufzeit vom Sender zum Empfänger besitzen, so dass der zeitliche Abfall des Modulationssignales nach dem Abschalten unterschiedlich verläuft, wenn im überwachten Bereich Veränderungen vorgenommen wurden, z. B. eine Abschirmwand im Raum plaziert worden ist, um die Alarmanlage zu sabotieren und unwirksam zu machen. Ein Vergleich mit einem durch ein Referenzsignal repräsentierten normalen zeitlichen Abfall des Modulationssignales zeigt dies.

Vorteilhaft ist es, die Ausbildung stehender Wellen im Raum dadurch zu reduzieren, dass die Modulation möglichst viele Frequenzen umfasst. Die Funktionskontrolle arbeitet dann auch sicher, wenn die Anlage zufällig unempfindlich ist. Durch das völlige Abschalten des Sendesignales wird erreicht, dass das ausgesandte und das reflektierte Signal nicht miteinander interferieren kann, und dass damit die Hauptursache für die Entstehung stehender Wellen im Raum entfällt.

Die Erfindung wird mittels der beigefügten Diagramme und Schaltungs-Beispiele näher erläutert. Es zeigen:

Figur 1 ein Schema einer Ultraschall-Alarmanlage,
Figur 2 das Zeit-Diagramm einer Test-Phase,
Figur 3 das Zeit-Diagramm des empfangenen Signales, und
Figur 4 das Schaltbild einer Ultraschall-Alarmanlage.

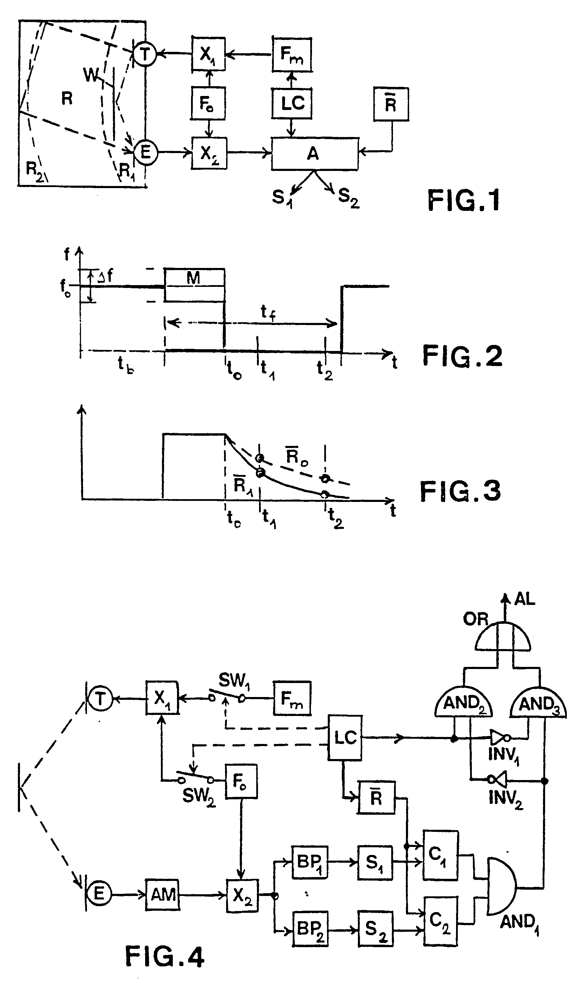

Bei der in Figur 1 wiedergegebenen Ultraschall-Alarmanlage werden in einen überwachten Raum oder Bereich R von einem Ultraschall-Sender T Ultraschall-Wellen ausgestrahlt und nach Reflexion an Wänden, Begrenzungen oder Objekten im Raum von einem Ultraschall-Aufnehmer E empfangen und in ein elektrisches Signal umgewandelt, das einer elektrischen Auswerteschaltung A zugeleitet wird. Im normalen Betriebszustand wird der Sender T von einem Frequenzgeber $F_0$ mit einer Frequenz $f_0$ angesteuert und zur kontinuierlichen Ausstrahlung von Ultraschall mit dieser Frequenz, z. B. 20 kHz veranlasst. Solange im überwachten Bereich R keine Bewegung stattfindet, erhält der Aufnehmer E nur Strahlung dieser Frequenz $f_0$. Am Ausgang des nachgeschalteten, ebenfalls vom Frequenzgeber $F_0$ angesteuerten Mischers oder Multiplikators $X_2$ tritt dann keine Differenz-Frequenz auf, so dass die Auswerteschaltung A keine Frequenzabweichung detektiert und kein Signal gibt. Sobald jedoch im überwachten Raum R eine Bewegung stattfindet, beispielsweise durch einen Einbrecher, erhält der Ultraschall-Aufnehmer E ausser Strahlung der Grundfrequenz $f_0$ Ultraschallwellen mit einer in Abhängigkeit von der Bewegungsgeschwindigkeit des Eindringlings nach dem Doppler-Effekt verschobenen Frequenz. Bei der genannten Grundfrequenz und den praktisch vorkommenden Bewegungsgeschwindigkeiten von Personen liegt diese Frequenzverschiebung im Bereich von 0 - 500 Hz. Die Auswerteschaltung A wertet nun die vom Aufnehmer E empfangenen Ultraschall-Wellen nach Durchgang durch den Mischer $X_2$ in an sich bekannter Weise auf das Vorhandensein solcher Frequenzverschiebungen aus und gibt gegebenenfalls ein Alarmsignal. Dabei können zusätzlich noch andere Kriterien berücksichtigt werden, um Störeinflüsse weitgehend zu eliminieren.

Zum Zwecke der Funktionskontrolle der Ultraschall-Alarmanlage wird der vom Sender T ausgestrahlte Ultraschall zu Beginn einer Test-Phase $t_f$, wie in Figur 2 gezeigt, von einem von einer Steuerschaltung LC gesteuerten weiterem Modulationsfrequenzgeber $F_m$ moduliert. Die Art der Modulation ist dabei so gewählt, dass nicht nur eine einzige Modulationsfrequenz auftritt, sondern mindestens eine Anzahl von Frequenzen oder ein ganzes Frequenzband $\Delta f$. Bei nur einer Frequenz des Frequenzgebers $F_m$ kann beispielsweise die Signalform von der Sinus-Form abweichend gewählt werden, z. B.

rechteck- oder sägezahnförmig, so dass möglichst viele Oberwellen erscheinen. Oder die Modulation kann aus einem Rausch-Signal oder einem Pseudo-Rauschen bestehen, mit kontinuierlichem Frequenzspektrum. Durch diese Multifrequenz-Modulation wird erreicht, dass sich im stehenden Wellenfeld keine ausgeprägten Maxima und Minima ausbilden, so dass die Funktionskontrolle auch dann einwandfrei arbeitet, wenn sich die Anlage infolge der vektoriellen Signal-Addition von Reflex-Signalen unterschiedlicher Phasenlage gerade zufällig in einem unempfindlichen Zustand befindet.

Nach einer bestimmten Zeit $t_0$ wird das modulierte Signal abgeschaltet und, wie in Figur 3 gezeigt, der zeitliche Abfall $\bar{R}_1$ des Reflexionssignales nach dem Abschalten beobachtet und mit einem von einem Referenzgeber $\bar{R}$ gelieferten Referenzsignal $\bar{R}_0$ verglichen. Der langsame Abfall des vom Aufnehmer E empfangenen Modulationssignales nach dem plötzlichen Abschalten des Modulationsgenerators $F_m$ kommt dadurch zustande, dass die Ultraschall-Wellen vom Sender T zum Aufnehmer E eine gewisse Laufzeit je nach Laufweg benötigen, und zwar bei Reflexion an näheren Objekten und nach Reflexion an ferneren Gegenständen eine entsprechend längere Laufzeit. Falls daher der effektiv beobachtete zeitliche Abfall des Modulationssignales $\bar{R}_1$ von dem vom Referenzgeber $\bar{R}$ gelieferten Signal $\bar{R}_0$, das den Normalzustand im überwachten Raum repräsentiert, abweicht, so bedeutet diese dass im überwachten Raum eine Veränderung vorgenommen wurde. Um eine unerwünschte Signalgabe zu unterdrücken, kann dabei der Referenzgeber $\bar{R}$ auch so eingerichtet sein, dass er zu bestimmten Zeitpunkten, z. B. bei der Scharfstellung der Alarmanlage, den Zustand und den effektiven zeitlichen Abfall speichert und in einer späteren Test-Phase den dann auftretenden Zeitabfall mit dem gespeicherten vergleicht, oder dass er den Zeitabfall in einer Test-Phase mit dem Zeitabfall einer vorhergehenden Test-Phase vergleicht.

Der Vergleich des wirklich beobachteten zeitlichen Abfalles des Modulationssignales mit dem Referenzsignal kann dabei, wie in Figur 3 gezeigt, zu bestimmten Zeitpunkten $t_1$ und $t_2$ vorgenommen werden, wobei diese Zeiten bestimmten Abständen reflektierender Objekte entsprechen. Auf diese Weise kann die Auswertung auf einen gewünschten Raumbereich beschränkt werden, und sehr nahe oder sehr ferne Objekte bei der Funktionskontrolle ausser Betracht gelassen werden. Beispielsweise kann die Auswertung auch in der Weise vorgenommen werden, dass ein Signal gegeben wird, wenn der zeitliche Abfall des Modulationssignales nach einer bestimmten Zeit schneller erfolgt, als bei dem Referenzsignal, da dies als Zeichen dafür angesehen werden kann, dass im entsprechenden Bereich eine schallabsorbierende Wand W angebracht worden ist, um die Alarmanlage unwirksam zu machen.

Figur 4 zeigt die Schaltung einer Ultraschall-Alarmanlage mit zwei Doppler-Auswertekanälen und zusätzlich einer erfindungsgemässen Funktionskontroll-Schaltung. Hierbei wird der Ultraschall-Sender T von einem Frequenzgenerator $F_0$ mit einer Frequenz $f_0$ über einem Mischer $X_1$ angesteuert. Weiter ist ein Modulationsgenerator $F_m$ vorgesehen, der den Mischer $X_1$ über einen von einer Steuerschaltung LC betätigten Schalter SW während des Beginnes einer Test-Phase ansteuert, und eine Modulation der vom Sender T ausgestrahlten Ultraschall-Wellen wie vorstehen beschrieben bewirkt. Die Modulation ist dabei so gewählt, dass ihre Frequenzen in den beiden Auswertekanälen für die Doppler-Frequenzverschiebung liegen, so dass das Modulations-Signal von der Auswerteschaltung ohne Änderungen verarbeitet werden kann. Die Ultraschall-Wellen aus dem überwachten Bereich werden von einem Ultraschall-Aufnehmer empfangen und in elektrisches Signal verwandelt, das über einen Verstärker AM, der frequenzselektiv für die Umgebung von $f_0$ ausgebildet sein kann, und über einen vom Frequenzgenerator $F_0$ ebenfalls angesteuerten Mischer oder Multiplikator $X_2$ den beiden Auswertekanälen zugeleitet. Diese weisen je einen Bandpass $BP_1$ bzw. $BP_2$ mit unterschiedlichem Durchlassbereich für die Doppler-Frequenzen des Mischers auf, z. B. einen unteren Bereich zwischen 20 und 50 Hz und einen oberen Bereich zwischen 60 und 100 Hz, je eine nachgeschaltete Speicherschaltung $S_1$ bzw. $S_2$, die als Integrator ausgebildet sein können, die ein Signal während einer bestimmten Zeit festhalten, und je eine Komparatorschaltung $C_1$ bzw. $C_2$, die ein Signal nur abgeben, wenn ein von einer logischen Steuerschaltung LC während der Test-Phase in vorgegebener Weise geändertes Signal eines Referenzgenerators $\bar{R}$ in der Test-Phase überschritten wird. Beide Auswertekanäle sind durch ein UND-Tor $AND_1$ verbunden, das nur dann ein Ausgangssignal an ein weiteres UND-Tor $AND_3$ und über einen Inverter $INV_2$ an ein UND-Tor $AND_2$ weitergibt, wenn ein Signal in beiden Auswertekanälen ansteht, d. h. wenn Doppler-Frequenzen in beiden Frequenzbereichen vorhanden sind oder wenn beide Kanäle korrekt funktionieren.

Das Signal des UND-Tores $AND_1$ wird dann dem Eingang des UND-Tores $AND_3$, dessen andere Eingang von der logischen Steuerschaltung LC über einen Inverter $INV_1$ angesteuert wird, und gleichzeitig über einen Inverter $INV_2$ einem weiteren UND-Tor $AND_2$, das von der logischen Steuerschaltung LC direkt angesteuert ist, zugeleitet. Die Ausgänge der beiden UND-Tore $AND_2$ und $AND_3$ sind an die Eingänge eines ODER-Tores OR angeschlossen, welches ein Alarmsignal AL abgibt, wenn eines

der UND-Tore $AND_3$ oder $AND_2$ ein Ausgangssignal zeigen. Mit dieser Schaltung wird erreicht, dass während der normalen Betriebs-Phase, in der kein Steuersignal gegeben wird, also $AND_2$ geschlossen, jedoch $AND_3$ geöffnet ist, über das Tor $AND_3$ ein Alarmsignal ausgelöst wird, wenn in beiden Auswertekanälen ein Dopplersignal von einem Eindringling vorhanden ist und an Ausgang des Tores $AND_1$ erscheint. Andererseits ist während einer Test-Phase, während der ein Signal der logischen Steuerschaltung LC ansteht, also Tor $AND_2$ geöffnet, aber Tor $AND_3$ über den Inverter $INV_1$ geschlossen ist, die Alarmsignalgabe durch den Inverter $INV_2$ blockiert, wenn am Ausgang von Tor $AND_1$ ein Signal ansteht, also wenn das Testsignal über beide Auswertekanäle korrekt eintrifft. Falls jedoch kein Ausgangssignal am Tor $AND_1$ auftritt, wird über $AND_2$ ein Alarmsignal ausgelöst, was die Funktionsunfähigkeit der Anlage, z. B. infolge Sabotage oder von Komponenten-Ausfall oder anderer Defekte signalisiert.

Mit der beschriebenen Auswerteschaltung werden sowohl die Vorteile der Mehrkanalauswertung gewahrt, die darin bestehen, dass geprüft wird, ob gleichzeitig oder kurz hintereinander innerhalb der Haltezeit der Speicherschaltungen $S_1$ und $S_2$ Doppler-Signale in beiden Kanälen auftreten, wie sie für die Bewegung von Personen charakteristisch sind, und andererseits mit der gleichen Schaltung die Funktion aller Komponenten, einschliesslich der beiden Auswertekanäle gleichzeitig überprüft werden kann. Abwandlungen für andere geeignete Auswertungsschaltungen liegen im Rahmen des Erfindungsgedankens, z. B. auch Schaltungen mit nur einem Auswertekanal oder mit mehr als zwei.

**Patentansprüche**

1. Verfahren zur Funktionskontrolle von Ultraschall-Alarmanlagen mit einem in einen überwachten Bereich (R) Ultraschall-Wellen mit bestimmter Frequenz ($f_0$) ausstrahlenden Ultraschall-Sender (T) und einem Ultraschall-Aufnehmer (E) zum Empfang von Ultraschall-Wellen aus dem überwachten Bereich (R) und zur Umwandlung in ein elektrisches Signal, welches einer elektrischen Auswerteschaltung (A) zugeführt wird, die bei einer bestimmten Frequenzabweichung der empfangenen von den ausgestrahlten Ultraschall-Wellen ein Alarmsignal ($S_1$, AL) auslöst, wobei während einer Test-Phase ($t_f$) eine Frequenzabweichung erzeugt wird, dadurch gekennzeichnet, dass die Frequenz ($f_0$) der ausgestrahlten Ultraschall-Wellen während der Test-Phase ($t_f$) mit einem bestimmten Frequenzspektrum ($f_m$) moduliert wird, das die zur Alarmauslösung ausgewertete Frequenzabweichung umfasst, und dass nach Abschaltung des modulierten Signales der Auswerteschaltung der zeitliche Abfall des empfangenen signales im Vergleich zu einem Referenzsignal ($\bar{R}_o$) zur Signalgabe ausgewertet wird.

2. Verfahren nach Anspruch 1, <u>dadurch gekennzeichnet</u>, dass das der Modulation dienende Frequenzspektrum aus einer stark oberwellenhaltigen Modulationsfrequenz besteht.

3. Verfahren nach Anspruch 1, <u>dadurch gekennzeichnet</u>, dass das der Modulation dienende Frequenzspektrum aus einem Rauschsignal oder Pseudo-Rauschen besteht.

4. Verfahren nach einem der Ansprüche 1 - 3, <u>dadurch gekennzeichnet</u>, dass der zeitliche Abfall des Modulationssignales in der Auswerteschaltung zu wenigstens einem Zeitpunkt ($t_1$, $t_2$) nach Abschaltung des modulierten Signals in den ausgestrahlten Ultraschallwellen mit einem Referenzsignal ($\bar{R}_o$) verglichen wird.

5. Verfahren nach einem der Ansprüche 1 - 3, <u>dadurch gekennzeichnet</u>, dass der zeitliche Abfall des Modulationssignales in der Auswerteschaltung zwischen zwei, einer oberen und einer unteren Entfernungsgrenze von Ultraschall reflektierenden Objekten entsprechenden, Zeitpunkten ($t_1$, $t_2$) nach Abschaltung des modulierten Signals in den ausgestrahlten Ultraschallwellen mit einem Referenzsignal ($\bar{R}_o$) verglichen wird.

6. Schaltungsanordnung zur Durchführung des Verfahrens nach einem der Ansprüche 1 - 5 mit einem in einen überwachten Bereich (R) Ultraschallwellen bestimmter Frequenz ausstrahlenden Ultraschall-Sender (T), einem Ultraschall-Aufnehmer (E) zum Empfang von Ultraschallwellen aus dem überwachten Bereich und einer daran angeschlossenen elektrischen Auswerteschaltung (A), die bei einer bestimmten Frequenzabweichung der empfangenen von den ausgestrahlten Ultraschallwellen ein Alarmsignal auslöst, <u>dadurch gekennzeichnet</u>, dass zur Funktionskontrolle eine Modulations-Einrichtung ($F_m$) vorgesehen ist, die ausgebildet ist, die Frequenz der ausgestrahlten Ultraschallwellen mit mehreren Frequenzen zu modulieren, so dass diese Modulation die von der Auswerteschaltung (A) zur Alarmsignalauslösung ausgewerteten Frequenzabweichungen umfasst, und dass die Auswerteschaltung eingerichtet ist, den Abfall des vom Aufnehmer empfangenen Modulations-Signales nach Abschaltung des modulierten Signals mit einem Referenzsignal zu vergleichen und bei einer vorbestimmten Abweichung ein Signal auszulösen.

7. Schaltungsanordnung nach Anspruch 6, <u>dadurch gekennzeichnet</u>, dass die Modulations-Einrichtung ($F_m$) einen stark oberwellenhaltigen Frequenzgenerator aufweist.

8. Schaltungsanordnung nach Anspruch 6, <u>dadurch gekennzeichnet</u>, dass die Modulations-Einrichtung ($F_m$) einen Rausch- oder Pseudorauschgenerator aufweist.

**Claims**

1. Method for monitoring the operation of ultrasonic alarm systems having an ultrasonic emitter (T) emitting ultrasonic waves having a specified frequency ($f_o$) into a monitored region (R) and an ultrasonic receiver (E) to receive ultrasonic waves from the monitored region (R) and to convert the same into an electrical signal, which is fed to an electrical evaluation circuit (A), which triggers an alarm signal ($S_1$, AL) in the case of a specified frequency deviation of the received from the emitted ultrasonic waves, a frequency deviation being generated during a test phase ($t_f$), characterized in that the frequency ($f_o$) of the emitted ultrasonic waves is modulated, during the test phase ($t_f$), with a specified frequency spectrum ($f_m$), which covers the frequency deviation evaluated for triggering the alarm, and in that, after disablement of the modulated signal of the evaluation circuit, the temporal decline of the received signal is evaluated in comparison with a reference signal ($\bar{R}_o$) to give a signal.

2. Method according to Claim 1, characterized in that the frequency spectrum employed for the modulation consists of a modulation frequency having a high content of harmonics.

3. Method according to Claim 1, characterized in that the frequency spectrum employed for the modulation consists of a noise signal or pseudo-noise.

4. Method according to one of Claims 1-3, characterized in that the temporal decline of the modulation signal is compared in the evaluation circuit, at at least one time ($t_1$, $t_2$) after disablement of the modulated signal in the emitted ultrasonic waves, with a reference signal ($\bar{R}_o$).

5. Method according to one of Claims 1-3, characterized in that the temporal decline of the modulation signal is compared in the evaluation circuit between two times ($t_1$, $t_2$), corresponding to an upper and a lower distance limit of objects reflecting ultrasonic waves, after disablement of the modulated signal in the emitted ultrasonic waves, with a reference signal ($\bar{R}_o$).

6. Circuit arrangement for carrying out the method according to one of Claims 1-5, having an ultrasonic emitter (T) emitting ultrasonic waves of specified frequency into a monitored region (R), an ultrasonic receiver (E) to receive ultrasonic waves from the monitored region and an electrical evaluation circuit (A), which is connected thereto and which triggers an alarm signal in the case of a specified frequency deviation of the received from the emitted ultrasonic waves, characterized in that, in order to monitor the operation, a modulating device ($F_m$) is provided, which is designed to modulate the frequency of the emitted ultrasonic waves with a plurality of frequencies, so that this modulation covers the frequency deviations evaluated by the evaluation circuit (A) for the triggering of the alarm signal, and in that the evaluation circuit is arranged to compare the decline of the modulation signal, received by the receiver, after disablement of the modulated signal, with a reference signal, and to trigger a signal in the event of a predetermined deviation.

7. Circuit arrangement according to Claim 6, characterized in that the modulating device ($F_m$) exhibits a frequency generator exhibiting a high content of harmonics.

8. Circuit arrangement according to Claim 6, characterized in that the modulating device ($F_m$) exhibits a noise generator or pseudo-noise generator.

**Revendications**

1. Procédé pour contrôler le fonctionnement d'installations d'alarme ultrasonores, comportant un émetteur d'ultrasons (T), émettant des ondes ultrasonores de fréquence déterminée ($f_o$) dans une zone contrôlée (R), et un récepteur d'ultrasons (E) servant à recevoir des ondes ultrasonores provenant de la zone contrôlée (R) et à les convertir en un signal électrique, qui est envoyé à un circuit d'évaluation électrique (A), qui déclenche un signal d'alarme ($S_1$, AL) dans le cas où les ondes ultrasonores reçues diffèrent d'un écart en fréquence déterminé des ondes ultrasonores émises, et selon lequel un écart en fréquence est produit pendant une phase d'essai ($t_f$), caractérisé par le fait que la fréquence ($f_o$) des ondes ultrasonores émises pendant la phase d'essai ($t_f$) est modulée par un spectre déterminé de fréquence ($f_m$), qui inclut l'écart en fréquence évalué pour le déclenchement de l'alarme, et qu'après l'interruption du signal modulé du circuit d'évaluation, la diminution temporelle du signal reçu par rapport à un signal de référence ($\bar{R}_o$) est évaluée pour la délivrance d'un signal.

2. Procédé suivant la revendication 1, caractérisé par le fait que le spectre de fréquence servant à réaliser la modulation est constitué par une fréquence de modulation contenant un grand nombre d'harmoniques.

3. Procédé suivant la revendication 1, caractérisé par le fait que le spectre de fréquence servant à réaliser la modulation est constitué par un signal de bruit ou un pseudo-bruit.

4. Procédé suivant l'une des revendications 1-3, caractérisé par le fait que la diminution temporelle du signal de modulation dans le circuit d'évaluation est comparé au moins à un instant ($t_1$, $t_2$) après l'interruption du signal modulé dans les ondes ultrasonores émises, à un signal de référence ($\bar{R}_o$).

5. Procédé suivant l'une des revendications 1-3, caractérisé par le fait que la diminution temporelle du signal de modulation dans le circuit d'évaluation est comparée entre deux instants ($t_1$, $t_2$) correspondant à une limite supérieure de distance et à une limite inférieure de distance d'objets réfléchissant les ultrasons, après l'interruption du signal modulé dans les ondes ultrasonores émises, à un signal de référence ($\bar{R}_o$).

6. Montage pour la mise en oeuvre du procédé selon l'une des revendications 1-5, comportant un émetteur d'ultrasons (T) émettant des ondes ultrasonores de fréquence déterminée dans une zone contrôlée (R), un récepteur d'ultrasons (E) servant à recevoir les ondes ultrasonores provenant de la zone contrôlée, et un circuit électrique d'évaluation (A) raccordé à l'émetteur et au récepteur et qui déclenche un signal d'alarme dans le cas où les ondes ultrasonores reçues diffèrent d'un écart en fréquence déterminé des ondes ultrasonores émises, caractérisé par le fait que pour le contrôle du fonctionnement il est prévu un dispositif de modulation ($F_m$) qui est agencé de manière à moduler la fréquence des ondes ultrasonores émises, avec plusieurs fréquences de telle sorte que cette modulation inclut les écarts en fréquence évalués par le circuit d'évaluation (A) pour le déclenchement d'un signal d'alarme, et que le circuit d'évaluation est agencé de manière à comparer la diminution du signal de modulation reçu par le récepteur, après l'interruption du signal modulé, à un signal de référence et à déclencher un signal dans le cas d'un écart prédéterminé.

7. Montage suivant la revendication 6, caractérisé par le fait que le dispositif de modulation ($F_m$) comporte un générateur de fréquences contenant un grand nombre d'harmoniques.

8. Montage suivant la revendication 6, caractérisé par le fait que le dispositif de modulation ($F_m$) comporte un générateur de bruits ou de pseudo-bruits.

FIG.1

FIG.2

FIG.3

FIG.4